# EUROPEAN PATENT APPLICATION

(11) **EP 3 508 449 A1**
(43) Date of publication of application: **10.07.2019**
(21) Application number: 17846807.0
(22) Date of filing: 19.06.2017
(51) Int. Cl.: C01D 3/04, C01D 7/26

(54) **METHOD FOR PREPARING LITHIUM CHLORIDE AND METHOD FOR PREPARING LITHIUM CARBONATE**

(30) Priority: 05.09.2016 KR 20160113684
(71) Applicant: POSCO, Pohang-si, Gyeongsangbuk-do 37859 (KR)
(72) Inventor: KIM, Seong Yeon, Pohang-si Gyeongsangbuk-do 37859 (KR); KIM, Kyung Seok, Pohang-si Gyeongsangbuk-do 37859 (KR); LEE, So Yeon, Pohang-si Gyeongsangbuk-do 37859 (KR); HONG, Wan Kee, Pohang-si Gyeongsangbuk-do 37859 (KR); CHOI, Jae Hyug, Pohang-si Gyeongsangbuk-do 37859 (KR)
(74) Representative: Potter Clarkson
(86) International application number: PCT/KR2017/006403
(87) International publication number: WO 2018/043882

(57) **Abstract**

The present invention is related to a method for producing lithium chloride aqueous solution and a method for producing lithium carbonate, and comprises introducing calcium chloride into a slurry containing a solvent and lithium phosphate; and obtaining a precipitate of chloroapatite which is an poorly soluble phosphoric acid compound and a lithium chloride aqueous solution by reacting lithium phosphate and calcium chloride in the slurry containing the solvent and lithium phosphate.

## Description

### [Technical field]

It is related to a method for producing lithium chloride, and lithium carbonate.

### [Prior art]

Recently, as electric vehicles and mobile devices are rapidly spreading, demand for lithium used as an electrode material of a battery is gradually increasing. In particular, lithium carbonate is used as a raw material in the manufacture of batteries for electric vehicles. The following methods are known as methods for producing such lithium carbonate.
(1) Lithium is extracted from minerals containing about 1 to 1.5% of lithium, such as spodumene, petalite or lepidolite, and then reacted with CO₂ for producing lithium carbonate.
   However, in order to extract lithium from minerals, it is necessary to perform processes such as flotation, high-temperature heating, pulverization, acid mixing, extraction, purification, concentration, and precipitation, so that the collection procedure is complicated, and expensive. In addition, there is a severe problem of environmental pollution by using strong acid in the process of extracting lithium.
(2) Lithium in brine is directly used.

The concentration of lithium contained in the brine is about 0.3 to 1.5 g/L, and lithium contained in the brine is mainly extracted in the form of lithium carbonate by adding CO₂ under pressure. The solubility of the lithium carbonate is about 15.4 g/L at 0 °C and about 7.2 g/L at 100 °C, the amount of lithium carbonate in the brine is 1.59 to 7.95 g/L assuming that lithium in brine is changed to lithium carbonate perfectly. (Since the molecular weight of Li₂CO₃ is 74 and the atomic weight of Li is 7, 74 ÷ 14 ≒ 5.3, so multiplying the lithium concentration by 5.3 can estimate the concentration of lithium carbonate)

Since most of the lithium carbonate concentration is lower than the solubility of lithium carbonate, the amount of lithium carbonate precipitated is so small that the lithium recovery rate is extremely low.

Therefore, conventionally, in order to extract lithium into the form of lithium carbonate, pumped salt is poured in natural brine to evaporation ponds of the open field, and after natural evaporation over a long period of time of one year or more. Then impurities such as Mg, Ca and B are precipitated and removed to recover lithium in an amount exceeding the solubility of lithium carbonate.

However, such a conventional method takes a long time to evaporate and concentrate the salt, resulting in low productivity. In the process of evaporating and concentrating the salt water, lithium precipitates in salt form together with other impurities, resulting in loss of lithium. In the rainy season, there was a problem of limited use.
(3) On the other hand, in the invention of Korean Patent Publication No. 2013-0113287, it is disclosed that a calcium hydroxide, which is a water-soluble reaction agent, is reacted with lithium phosphate in water to prepare an aqueous solution of lithium hydroxide first and then blowing CO₂ gas to produce lithium carbonate. Since the solubility of lithium phosphate in water is as low as 0.39 g/L at 20 °C, lithium phosphate was dissolved in an acid in a conventional method to leach lithium ions. However, in this patent, calcium hydroxide, which is a water-soluble reagent, is directly reacted with lithium in lithium phosphate to obtain lithium ions in the form of aqueous solution of lithium hydroxide through an aqueous phase reaction without any additional acid treatment.

However, in this method, since the reaction rate of calcium hydroxide with lithium phosphate is not fast, it takes a long time to obtain lithium ions to an economical concentration.

Thus, when the reaction time of calcium hydroxide and lithium phosphate is limited in view of economic efficiency, there is a problem that the concentration of lithium ions in the aqueous solution of lithium hydroxide obtained is low and the recovery rate of lithium ions is not high.

Concretely, since the reaction rate of calcium hydroxide with lithium phosphate is not sufficiently fast, it is possible to recover lithium ions at a low concentration of about 5,000 ppm within an economically acceptable reaction time.

Accordingly, it is necessary to concentrate the solution at a high concentration before the production of lithium carbonate in the subsequent step, which requires additional processing for concentration and requires a large amount of evaporation energy. There is also a technology such as Chinese patent CN201210404254 (application number), but there are the following problems.

The Chinese patent uses a starting material as a phosphoric acid-lithium-iron compound which is a cathode material of a lithium battery.

It is leached with hydrochloric acid, and the result is iron phosphate, lithium phosphate, and iron chloride components dissolved in water.

Then, the alkali component is added to the solution, the pH is adjusted to 2.0-2.5, and iron phosphate is precipitated and filtered to remove the iron component in the form of iron phosphate. After adjusting the pH of the filtrate to 6.0-7.0, CaCl₂ is added to precipitate with calcium phosphate, and the calcium phosphate is removed by filtration. Here, Ca component and PO₄ ion are removed.

When the final filtrate is evaporated and concentrated, a LiCl crystal material is precipitated. The precipitate is filtered and washed to obtain the product LiCl.

That is, the Chinese patent uses hydrochloric acid to leach lithium ions from the lithium-containing phosphate. Thereafter, calcium chloride is added to remove phosphate ions.

The problem with this prior patent is the leaching of lithium from the lithium-containing phosphate using strong acids. Strong, especially hydrochloric acid, is very diverse in the process and causes serious problems.

### [Description of invention]

### [Problems to be solved]

In order to solve the above mentioned problems, one embodiment of the present invention is to provide a process for producing an environmentally friendly lithium chloride aqueous solution capable of extracting lithium ions at a high concentration from a lithium-containing phosphate in a short time.

In addition, it is to provide a method for economically preparing lithium carbonate from an aqueous solution of lithium chloride.

### [Means to Solve Problems]

In one embodiment of the present invention, it is provided that a method for producing lithium chloride aqueous solution includes:
introducing calcium chloride into a slurry containing a solvent and lithium phosphate; and obtaining a precipitate of chloroapatite which is an poorly soluble phosphoric acid compound and a lithium chloride aqueous solution by reacting lithium phosphate and calcium chloride in the slurry containing the solvent and lithium phosphate.

The solvent of the slurry may be water

The solvent of the slurry may be deionized water

In the step of introducing calcium chloride into the slurry containing the solvent and lithium phosphate, the lithium phosphate may be derived from lithium in brine, lithium in the waste battery, lithium in the ore, or a combination thereof.

The step of obtaining a precipitate of chloroapatite which is an poorly soluble phosphoric acid compound and a lithium chloride aqueous solution by reacting lithium phosphate and calcium chloride in the slurry containing the solvent and lithium phosphate may be:
obtaining a precipitate of chloroapatite which is an poorly soluble phosphoric acid compound, unreacted lithium phosphate particle, and a lithium chloride aqueous solution by reacting lithium phosphate and calcium chloride in the slurry containing the solvent and lithium phosphate.

The method for producing the lithium chloride aqueous solution may be characterized in that the reaction conditions are neutral or basic conditions throughout all the steps.

The method for producing the lithium chloride aqueous solution may be characterized in that the reaction conditions are at least pH 7 throughout all the steps.

The lithium phosphate is not obtained by a process of leaching through strong acid treatment.

A concentration of lithium ions in the lithium chloride aqueous solution may be 10,000 ppm or more.

In the step of obtaining a precipitate of chloroapatite which is an poorly soluble phosphoric acid compound and a lithium chloride aqueous solution by reacting lithium phosphate and calcium chloride in the slurry containing the solvent and lithium phosphate, the reaction rate of the lithium phosphate in the reaction of the lithium phosphate with calcium chloride may be 90% or more.

The method can further include:
injecting the washed filtrate into the slurry containing the solvent and lithium phosphate so as to recover residual lithium in the washed filtrate after washing the obtained chloroapatite precipitate with water, after obtaining a precipitate of chloroapatite which is an poorly soluble phosphoric acid compound and a lithium chloride aqueous solution by reacting lithium phosphate and calcium chloride in the slurry containing the solvent and lithium phosphate.

The method can further include:
injecting the washed filtrate into the lithium chloride aqueous solution obtained by the step of obtaining a precipitate of chloroapatite which is an poorly soluble phosphoric acid compound and a lithium chloride aqueous solution by reacting lithium phosphate and calcium chloride in the slurry containing the solvent and lithium phosphate, so as to recover residual lithium in the washed filtrate after washing the obtained chloroapatite precipitate with water,
after obtaining a precipitate of chloroapatite which is an poorly soluble phosphoric acid compound and a lithium chloride aqueous solution by reacting lithium phosphate and calcium chloride in the slurry containing the solvent and lithium phosphate.

In the step of introducing calcium chloride into a slurry containing a solvent and lithium phosphate, an amount of the introduced calcium chloride is 1.500 times or more and 2.334 times or less as much as the lithium phosphate based on the molar amount.

In the step of obtaining a precipitate of chloroapatite which is an poorly soluble phosphoric acid compound and a lithium chloride aqueous solution by reacting lithium phosphate and calcium chloride in the slurry containing the solvent and lithium phosphate, the reaction temperature may be 20 °C or more, and 105 °C or less, and the reaction pressure may be 0 bar or more and 1.01325 bar or less.

In the step of obtaining a precipitate of chloroapatite which is an poorly soluble phosphoric acid compound and a lithium chloride aqueous solution by reacting lithium phosphate and calcium chloride in the slurry containing the solvent and lithium phosphate, the reaction temperature may be 100 °C or more, and 250 °C or less, and the reaction pressure may be 1.01325 bar or more and 40 bar or less.

In other embodiment of the present invention, it is provided that a method for producing lithium carbonate comprises:
preparing a lithium chloride aqueous solution; and obtaining lithium carbonate and a filtrate by adding sodium carbonate to the lithium chloride aqueous solution; wherein, a concentration of lithium ions in the lithium chloride aqueous solution is 10,000 ppm or more.

In the step of preparing a lithium chloride aqueous solution, the lithium in the lithium chloride may be derived from lithium in brine, lithium in the waste battery, lithium in the ore, or a combination thereof.

The method can further include:
obtaining lithium phosphate by adding a phosphorus supplying material to the filtrate, after the step of obtaining lithium carbonate and a filtrate by adding sodium carbonate to the lithium chloride aqueous solution.

The method can further include:
injecting the washed filtrate into the lithium chloride aqueous solution in the step of preparing a lithium chloride aqueous solution, so as to recover residual lithium in the washed filtrate after washing the obtained lithium carbonate with water, after the step of obtaining lithium carbonate and a filtrate by adding sodium carbonate to the lithium chloride aqueous solution.

In the step of obtaining lithium carbonate and a filtrate by adding sodium carbonate to the lithium chloride aqueous solution, the sodium carbonate may be added in such an amount that the molar ratio (lithium ion: sodium ion) of the lithium ion in the lithium chloride aqueous solution to the sodium ion in the sodium carbonate is 1: 0.8 to 1: 1.2.

In the step of obtaining lithium carbonate and a filtrate by adding sodium carbonate to the lithium chloride aqueous solution, a reaction temperature may be 20 °C or more and 100 °C or less.

In the step of preparing a lithium chloride aqueous solution, the lithium chloride aqueous solution is produced from the method for producing lithium chloride aqueous solution according to the embodiment of the present invention.

### [Effect]

According to the method for producing a lithium chloride aqueous solution according to an embodiment of the present invention, it is possible to produce a high concentration aqueous solution of lithium chloride having a lithium ion concentration of 10,000 ppm or more within a short period of time. Therefore, the amount of evaporation energy required for concentration of the lithium chloride aqueous solution is reduced before the production of lithium carbonate in the subsequent step, and the economic efficiency of the process can be remarkably improved.

Also, the method for producing a lithium chloride aqueous solution according to an embodiment of the present invention is an environmentally friendly manufacturing method since it does not include an acid treatment step in all the steps.

In addition, according to the method for producing lithium carbonate according to an embodiment of the present invention, lithium carbonate can be produced economically by a simple process.

### [Brief description of drawings]

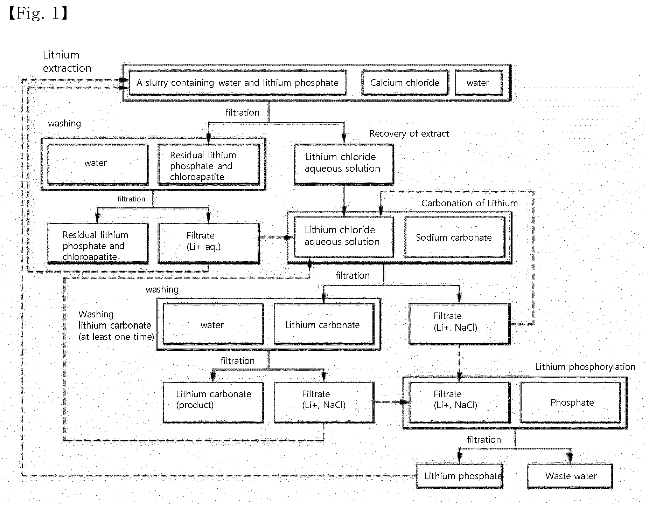

FIG. 1 is a schematic block diagram of a method for producing lithium chloride aqueous solution and a method for producing lithium carbonate according to an embodiment of the present invention.

### [Detailed description of the present invention]

Hereinafter, embodiments of the present invention will be described in details. Hereinafter, embodiments of the present invention will be described in details.

Unless defined otherwise, all terms (including technical and scientific terms) used herein may be used in a sense commonly understood by one of ordinary skill in the art to which this invention belongs. Whenever a component is referred to as "comprising" an element throughout the specification, it is to be understood that the element may include other elements, not the exclusion of any other element, unless the context clearly dictates otherwise. Also, singular forms include plural forms unless the context clearly dictates otherwise.

FIG. 1 is a schematic block diagram of a method for producing lithium chloride aqueous solution and a method for producing lithium carbonate according to an embodiment of the present invention. However, the present invention is not limited thereto, and various modifications can be made without departing from the technical idea of the present invention.

Hereinafter, a method for producing lithium chloride aqueous solution and a method for producing lithium carbonate according to an embodiment of the present invention will be described with reference to Fig. 1.

### [Method for producing lithium chloride aqueous solution]

In one embodiment of the present invention, it is provided that a method for producing lithium chloride aqueous solution includes:
introducing calcium chloride into a slurry containing a solvent and lithium phosphate; and obtaining a precipitate of chloroapatite which is an poorly soluble phosphoric acid compound and a lithium chloride aqueous solution by reacting lithium phosphate and calcium chloride in the slurry containing the solvent and lithium phosphate. The water may be deionized water (DI water) without impurities.

This is a method capable of producing a lithium chloride aqueous solution at a high concentration without any additional acid treatment. In addition, in the method for producing lithium chloride according to one embodiment of the present invention, the reaction rate can be improved as compared with the conventional process.

In the reaction of the lithium phosphate with calcium chloride, calcium chloride functions as a phosphate anion precipitant and precipitates the poorly soluble phosphoric acid compound. The solubility of the poorly soluble phosphoric acid compound in water may be lower than that of the lithium phosphate. Specifically, the above process can be carried out according to the following Reaction Scheme 1.

[Reaction Scheme 1] 3Li₃PO_{4(aq)} + 5CaCl_{2(aq)} -> 9Li⁺_{(aq)} + 9Cl⁻_{(aq)} + Ca₅(PO₄)₃Cl₍ₛ₎

That is, when lithium phosphate and calcium chloride are dissolved in some water, the calcium cation (Ca²⁺) and some chlorine anion (Cl⁻) react with the phosphate anion (PO₄³⁻) generated from lithium phosphate to form a stable poorly soluble phosphoric acid compound, (Chloroapatite, Ca₅(PO₄)₃Cl) precipitates. At this time, once the poorly soluble phosphoric acid compound is precipitated, the lithium cation (Li⁺) and the chlorine anion (Cl⁻) remain in the solution, and an aqueous solution of lithium chloride can be obtained.

When the poorly soluble phosphate compound is precipitated, the phosphate anion is depleted, so that the lithium phosphate can be continuously dissolved and dissociated into water. As a result, the concentration of the lithium cation (Li⁺) and the chloride anion (Cl⁻) in the solution becomes high, and a high concentration lithium chloride aqueous solution can be obtained.

Specifically, lithium phosphate is a stable substance as a poorly soluble compound (or salt) having a solubility of 0.39 g/L at 20 °C, but the solubility of chloroapatite is very low compared to lithium phosphate and calcium chloride (745 g/L at 20 °C). Since the chloroapatite is more stable than the two materials, Reaction Scheme 1 may proceed in a regular manner.

In addition, since the reaction product chloroapatite is continuously precipitated as described above, when the chloroapatite, which is a product in water as a solvent, is continuously removed, so that the reaction can be continued in the direction of the regular reaction.

In the above-described method of producing a lithium chloride aqueous solution, the concentration of lithium ions in the obtained lithium chloride aqueous solution may be 10,000 ppm or more, 15,000 ppm or more, 10,000 ppm or more and 40,000 ppm or less, or 15,000 ppm or more and 40,000 ppm or less.

In the technique of obtaining lithium in the form of lithium hydroxide aqueous solution using lithium phosphate and calcium hydroxide of the prior art, the solubility of calcium hydroxide in water is 1.73 g/L at 20 °C.

Accordingly, in the prior art, the reaction rate of lithium phosphate during an economically acceptable reaction time in the reaction of lithium phosphate with calcium hydroxide is as low as 40 to 80%. Accordingly, in the prior art, it was only possible to obtain a low concentration aqueous solution of lithium hydroxide at a level of about 5,000 ppm. The reason why the reaction rate between lithium phosphate and calcium hydroxide is not increased is that as the reaction continues, the pH rises with increasing [OH⁻] concentration, since the solubility of calcium hydroxide decreases with increasing pH. The solubility of calcium hydroxide is 1.73 g/L at 20 °C and the pH is only about 12.2 by solubility alone. When the reaction proceeds and the pH reaches 14, the solubility of calcium hydroxide in water is lowered to about 0.004 g/L. As a result, since the reaction rate between lithium phosphate and calcium hydroxide is remarkably lowered, it is difficult to increase the reaction rate and to obtain lithium hydroxide having a high concentration.

Therefore, in order to use the lithium hydroxide aqueous solution for the subsequent production of lithium carbonate, an additional concentration process for a concentration of 9,000 ppm or more is required, and a large amount of evaporation energy is consumed at this time.

The solubility of calcium chloride, a constituent according to one embodiment of the present invention, in water is 745 g/L at 20 °C.

That is, the solubility of calcium chloride, which is a main component according to one embodiment of the present invention, in water is significantly higher than that of calcium hydroxide in the prior art. As a result of the reaction between lithium phosphate and calcium chloride, the concentration of [Li⁺] ions in the aqueous solution reaches 40,000 ppm, and the [Cl⁻] ion is simultaneously increased. The solubility of calcium chloride is kept high enough so that the reaction between lithium phosphate and calcium chloride can be continued.

Therefore, the reaction rate of lithium phosphate in an economically acceptable reaction time is as high as 80% or more.

As a result, the reaction time can be shortened to obtain the lithium cation concentration in the lithium chloride aqueous solution to 20,000 ppm. Concretely, a result that can be shortened to 5 hours was obtained.

Accordingly, it is possible to obtain a lithium chloride aqueous solution having a very high concentration of 10,000 ppm or more as a result of the reaction within an economically acceptable reaction time, and the reaction time can be remarkably reduced as compared with the case of using calcium hydroxide as a reactant in the prior art.

Therefore, when producing lithium carbonate as a subsequent step, a separate process for concentrating lithium chloride aqueous solution is not required, or only a very small amount of evaporation energy is consumed, and the process cost can be drastically reduced.

The lithium phosphate may be, for example, lithium phosphate powder dried in its form or lithium phosphate in the form of a filter cake, but is not limited thereto.

On the other hand, the lithium phosphate may be in a form including other cation components. For example, when lithium in the lithium phosphate is derived from lithium in brine, the brine may contain cations such as calcium, magnesium, iron, potassium, sodium, chromium, lead, or cadmium in combination with lithium. When a phosphate salt, phosphoric acid, or other phosphorus supply material is added thereto, lithium may be phosphorylated and precipitated in the form of lithium phosphate.

Here, lithium phosphate is a substance having a low solubility in water (∼ 0.39 g/L) and can be extracted in the form of a slurry in the phosphorylation process. When lithium phosphate is extracted in this way, the cations without lithium become an impurity, and impurity removal can be performed before, after, or both before and after the phosphorylation step in a manner generally known in the art.

When the lithium phosphate slurry is heated or naturally dried to obtain dried lithium phosphate powder, the lithium phosphate slurry is filtered to obtain lithium phosphate in a filter cake state.

However, even if the impurity removal step is not performed or the impurity removal step is carried out, the lithium phosphate may inevitably contain some cationic impurities as mentioned above.

In the above method for producing lithium chloride aqueous solution, the slurry containing the solvent and lithium phosphate may not contain a strong acid such as hydrochloric acid.

Conventionally, a process of leaching lithium ions through a strong acid in a lithium-containing mineral or leaching lithium phosphate through an acid (for example, hydrochloric acid as a strong acid) from a waste cathode material containing iron phosphate of the waste battery, has a problem that corrosion of equipment and environmental pollution are caused. In addition, when lithium phosphate is leached from the waste cathode material through strong acid, since strong acid remains as a solvent in a subsequent step, problems such as corrosion of equipment and environmental pollution may become more serious throughout the process. Furthermore, additional chemicals are used to adjust the pH, such as raising the lowered pH, and additional processing must be performed, which adds to the process cost.

Further, the entire process of the method for producing lithium chloride aqueous solution according to an embodiment of the present invention may be performed under a condition that the pH is not lowered to a strong acid condition of 2 or less. That is, In the step of obtaining a precipitate of chloroapatite which is an poorly soluble phosphoric acid compound and a lithium chloride aqueous solution by reacting lithium phosphate and calcium chloride in the slurry containing the solvent and lithium phosphate, the reaction rate can be improved by adding a small amount of acid to create a slightly acidic environment with a pH of more than 2.

In the step of obtaining a precipitate of chloroapatite which is an poorly soluble phosphoric acid compound and a lithium chloride aqueous solution by reacting lithium phosphate and calcium chloride in the slurry containing the solvent and lithium phosphate, the unreacted lithium phosphate particles remaining after the reaction between lithium phosphate and calcium chloride, and the precipitated chloroapatite can be obtained as a residual material under non-acidic conditions.

When the solvent becomes acidic by the strong acid component, unreacted lithium phosphate is dissolved and cannot remain in the form of particles. Further, the reaction product, chloroapatite, is decomposed and the phosphoric acid (H₃PO₄) is dissolved again in the water. As a result, the concentration of phosphate not directly caused by lithium phosphate, which is a reactant in water, is increased. As a result, the dissolution rate of lithium phosphate is lowered and the reaction rate is decreased. Finally, it may become impossible to obtain a high concentration aqueous solution of lithium chloride which is desired in one embodiment of the present invention.

The method for producing a lithium chloride aqueous solution of according to one embodiment of the present invention is in the form of a slurry in which unreacted reactant (lithium phosphate particles) continuously exists in the reaction product (chlorapatite and lithium chloride aqueous solution).

As described above, the fact that the solvent is not acidic due to the strong acid component can be made clear when lithium of the lithium phosphate is derived from lithium in brine. In the case of precipitation in the form of lithium phosphate in brine, a phosphorous supply material such as phosphate is added to the brine, and lithium phosphate is precipitated by utilizing the poor solubility of the lithium phosphate through the reaction between the dissolved lithium ion and the phosphate anion in the brine. The strong acid treatment may not be performed.

A more specific method of precipitating lithium phosphate from such brine can be suitably employed in a known method not treating strong acid.

In the step of introducing calcium chloride into a slurry containing a solvent and lithium phosphate, an amount of the introduced calcium chloride is 1.500 times or more and 2.334 times or less as much as the lithium phosphate based on the molar amount. If the amount of calcium chloride is too small, the lithium ion in the lithium phosphate may not be released due to insufficient elution of lithium ions, and if too much, the calcium ion may be excessively contained in the lithium chloride aqueous solution after the reaction. More specifically, it may be 1.600 times or more and 2.000 times or less.

In the step of obtaining a precipitate of chloroapatite which is an poorly soluble phosphoric acid compound and a lithium chloride aqueous solution by reacting lithium phosphate and calcium chloride in the slurry containing the solvent and lithium phosphate, the reaction temperature may be 20 °C or more, and 105 °C or less, and the reaction pressure may be 0 bar or more and 1.01325 bar or less. Also, the reaction temperature may be 100 °C or more, and 250 °C or less, and the reaction pressure may be 1.01325 bar or more and 40 bar or less. Here, the temperature dividing points of the two sections may be determined at 100 °C or higher and 105 °C or lower by the boiling point rise caused by the solute atoms in the slurry. If the temperature is too low, the dissolution rate of lithium due to the reaction with calcium chloride from lithium phosphate may be slow and the time may be long. If the temperature is too high, the dissolution rate may be accelerated. However, the cost required for raising the temperature of the solution and the cost required for sealing the reaction may excessively increase.

As a specific example, when the reaction pressure of the lithium phosphate and calcium chloride is in the vicinity of atmospheric pressure (about 1.01325 bar), the reaction temperature can be 90 °C or higher and 105 °C or lower. Also in this case, the reactor pressure can be further adjusted to a reactor pressure of at least 0.9 bar and atmospheric pressure (about 1.01325 bar) or less. When the reaction pressure is set at a level slightly lower than the atmospheric pressure, since the water gradually evaporates with time, the reaction rate can be accelerated by the enough initial amount of water, and finally the concentration of the solution can be increased.

As another example, when the reaction pressure is around 20 bar, the boiling point of the aqueous solution is about 200 °C, so that the reaction can be performed near 200 °C. In this case, the temperature can be raised to a high temperature of 200 °C by using (but not limited to) an autoclave or the like, and the reaction rate can be controlled very rapidly by reacting at a high temperature.

However, it is to be understood that the process pressure and the temperature may be controlled according to various process conditions.

The method can further include:
injecting the washed filtrate into the slurry containing the solvent and lithium phosphate so as to recover residual lithium in the washed filtrate after washing the obtained chloroapatite precipitate with water, after obtaining a precipitate of chloroapatite which is an poorly soluble phosphoric acid compound and a lithium chloride aqueous solution by reacting lithium phosphate and calcium chloride in the slurry containing the solvent and lithium phosphate.

Specifically, first, the step of filtering the chloroapatite precipitate and aqueous lithium chloride solution may be included. Thus, the filter cake containing the lithium chloride aqueous solution and the chloroapatite can be separated. The filter cake may further include residual lithium phosphate particles. At this time, the temperature at the time of filtration may be 5 °C or higher and 95 °C or lower. The reason for limiting the temperature range in this way is that if the temperature is lower than 5 °C, the viscosity of the slurry becomes higher and the filtration is not smooth. If the temperature is higher than 95 °C, the energy input cost increases and the filtration equipment is difficult to operate.

Thereafter, the filter cake containing the separated chloroapatite may be washed with water, and the filtrate obtained by filtration may be added to the slurry containing the solvent and lithium phosphate. The washing with water and the filtration can be carried out one or more times as required, and the amount of water at the time of washing can be 0.5 times or more and 5 times or less the amount of chloroapatite. If it is less than 0.5 times, the recovery rate of the lithium ion is low because of the high ratio of the washing solution remaining in the solid after filtration. If it is more than 5 times, the washing effect and recovery of lithium ion are good but the concentration of the filtrate becomes lower and ineffective for reuse.

Thus, lithium ions contained in a small amount of precipitate such as chloroapatite precipitated after the reaction are recovered and reused as a reactant, whereby loss of lithium can be prevented.

Otherwise, the method can further include: injecting the washed filtrate into the lithium chloride aqueous solution obtained by the step of obtaining a precipitate of chloroapatite which is an poorly soluble phosphoric acid compound and a lithium chloride aqueous solution by reacting lithium phosphate and calcium chloride in the slurry containing the solvent and lithium phosphate, so as to recover residual lithium in the washed filtrate after washing the obtained chloroapatite precipitate with water.

Thus, lithium ions contained in a small amount of precipitate such as chloroapatite can be recovered and used as a raw material in the subsequent step of producing lithium carbonate, thereby preventing loss of lithium.

### [Removal of unreacted calcium ions in aqueous solution of lithium chloride]

Although not shown in Fig. 1, the method further includes a step of removing the unreacted calcium ions remaining in the obtained lithium chloride aqueous solution before using the lithium chloride aqueous solution for the production of lithium carbonate.

Before the lithium carbonate precipitation, the removal of calcium ions is to prevent the calcium carbonate from being mixed with the lithium carbonate. Specifically, the unreacted calcium ions remaining in the lithium chloride aqueous solution can be removed by supplying oxygen dioxide (CO₂) to the lithium chloride aqueous solution to precipitate calcium ions in the form of calcium carbonate (CaCO₃). Alternatively, a method may be employed in which a carbonate is supplied to the lithium chloride aqueous solution to precipitate calcium ions in the form of calcium carbonate (CaCO₃). However, the present invention is not limited thereto. Since calcium carbonate is much less soluble in water than lithium carbonate, it is possible to remove calcium in carbonate form preferentially.

Before the aqueous solution of lithium chloride is used in the preparation of lithium carbonate, the pH of the solution may be raised to 13.5 or more and precipitated in the form of calcium hydroxide. As the pH increases, the solubility of calcium hydroxide lowers and calcium hydroxide can be precipitated.

Before the aqueous solution of lithium chloride is used in the preparation of lithium carbonate, the solution may be added with a sulfate to precipitate in the form of calcium sulfate.

The step of precipitating calcium in the form of calcium carbonate, calcium hydroxide and calcium sulfate in the aqueous solution is carried out by a target a first reaction solution, or a first filtrate. The first reaction solution may include a precipitate of poorly soluble phosphoric acid (chloroapatite), an aqueous solution of lithium chloride, unreacted lithium phosphate, unreacted calcium chloride by reacting lithium phosphate and calcium chloride. When calcium is precipitated in the first filtrate, a separate fraction 1a is separately performed.

In this way, when unreacted calcium ions are removed prior to the production of lithium carbonate, an effect of preventing calcium carbonate from being incorporated as an impurity can be obtained when lithium carbonate is precipitated by the addition of sodium carbonate thereafter.

### [Preparation method of lithium carbonate]

In other embodiment of the present invention, it is provided that a method for producing lithium carbonate comprises:
preparing a lithium chloride aqueous solution; and obtaining lithium carbonate and a filtrate by adding sodium carbonate to the lithium chloride aqueous solution. Wherein, a concentration of lithium ions in the lithium chloride aqueous solution is 10,000 ppm or more.

Lithium carbonate can be precipitated from a lithium chloride aqueous solution having a lithium ion concentration of 10,000 ppm or more at a high concentration through the reaction of lithium chloride and sodium carbonate. Therefore, there is no need to further concentrate the lithium chloride aqueous solution to increase the concentration thereof, and thus lithium carbonate can be economically produced.

Soda ash may be used as a raw material of the sodium carbonate. Soda ash is about 98% or more of sodium carbonate and can be used as a raw material for sodium carbonate. However, it should be understood that other materials usable as a raw material of sodium carbonate may be used, but the present invention is not limited thereto.

It is unnecessary to use a high-pressure vessel as compared with a conventional method of producing lithium carbonate using CO₂ gas by precipitating lithium carbonate through reaction with lithium cations using a solid carbonate raw material. Thus, the facility can be made more compact. Thus, the process cost can be remarkably reduced. In addition, as in the above-mentioned lithium chloride aqueous solution production method, since no acid or base sample is used even in the additional lithium carbonate production step, corrosion of equipment can be minimized and environmental pollution can be prevented.

The sodium carbonate may be added in such an amount that the molar ratio (lithium ion: sodium ion) of the lithium ion in the lithium chloride aqueous solution to the sodium ion in the sodium carbonate is 1: 0.8 to 1: 1.2. If the amount of sodium carbonate is too small, lithium carbonate may not sufficiently precipitate and the recovery rate of lithium may be decreased. If too much, the amount of precipitated lithium carbonate may increase, but the cost of sodium carbonate may increase. More specifically it can be added in an amount of 1: 0.9 to 1: 1.1.

In the step of obtaining lithium carbonate and a filtrate by adding sodium carbonate to the lithium chloride aqueous solution, a reaction temperature may be 20 °C or more and 100 °C or less. When sodium carbonate is added to the aqueous solution of lithium chloride, lithium carbonate is precipitated and exothermic reaction is caused to raise the temperature of the solution, so that the reaction temperature is higher than or equal to 20 °C and lower than or equal to 100 °C. If the reaction temperature is too low, the solubility of lithium carbonate increases and the recovery rate of lithium decreases. If the reaction temperature is too high, the solubility of lithium carbonate decreases and the recovery rate of lithium increases. However, the increase in the energy cost required for the temperature rise and the maintenance of the filtration apparatus may become difficult.

The method can further include:
injecting the washed filtrate into the lithium chloride aqueous solution in the step of preparing a lithium chloride aqueous solution, so as to recover residual lithium in the washed filtrate after washing the obtained lithium carbonate with water, after the step of obtaining lithium carbonate and a filtrate by adding sodium carbonate to the lithium chloride aqueous solution.

Specifically, in the step of obtaining lithium carbonate and a filtrate by adding sodium carbonate to the lithium chloride aqueous solution, lithium carbonate obtained as a result of the reaction of lithium chloride and sodium carbonate in the lithium chloride aqueous solution is precipitated and an aqueous solution in which the remaining water soluble substances are dissolved is obtained. Thereafter, they may be separated by filtration and separated into lithium carbonate and a filtrate.

At this time, the temperature at the time of filtration may be 5 °C or higher and 95 °C or lower. The reason for limiting the temperature range in this way is that if the temperature is lower than 5 °C, the viscosity of the slurry becomes higher and the filtration is not smooth. If the temperature is higher than 95 °C, the energy input cost increases and the filtration equipment is difficult to operate.

In addition, impurities such as sodium chloride in the aqueous solution state may be present in the filter cake containing the filtered lithium carbonate. In order to remove this, lithium carbonate in which impurities have been removed can be obtained through a solid-liquid separation step in which water is added as a solvent and washed and then filtered again. Washing and solid-liquid separation can be carried out at least once and can be repeatedly carried out until the content of impurities is reduced to a desired level.

In addition, lithium ions are dissolved in the obtained filtrates, which can be added to the step of preparing the lithium chloride aqueous solution and recycled as a reactant, thereby preventing loss of lithium.

Alternatively, since lithium ions are dissolved in the obtained filtrates, they can be recovered as lithium phosphate by adding a salt containing phosphate or phosphoric acid thereto. The recovered lithium phosphate containing solution can be reused as a lithium phosphate raw material after filtering and washing again to remove impurities.

Hereinafter, preferred embodiments and comparative examples of the present invention will be described. However, the following examples are only a preferred embodiment of the present invention, and the present invention is not limited to the following examples.

### Example

Lithium phosphate and calcium chloride were prepared in an equivalent ratio according to the following Reaction Scheme 1 so that the initial total amount of lithium was 2 kg.

[Reaction Scheme 1] 3Li₃PO_{4(aq)} + 5CaCl_{2(aq)} -> 9Li⁺_{(aq)} + 9Cl⁻_{(aq)} + Ca₅(PO₄)₃Cl₍ₛ₎

The lithium phosphate thus prepared was 11.12 kg and the calcium chloride was 17.77 kg (the amount of calcium chloride was 1.667 times that of lithium phosphate based on the molar amount), and these were poured into 100 L of water to prepare a mixed slurry.

Thereafter, the mixed slurry was reacted at 100 °C with stirring at an internal pressure of 1.03125 bar for 4 hours. At this time, the reaction rate of Li₃PO₄ converted to lithium chloride by the reaction of CaCl₂ was 95.3%, and 4.7% remained solid. The pH during the reaction was in the neutral range (pH 7-9, about 8.5).

After the reaction, the slurry was filtered through a filter press at a temperature of 65 °C to obtain a first filtrate. 21.34 liters of water was added to the filter cake, followed by stirring and mixing, followed by filtration once to obtain a filtrate. Then, the filtrate was mixed with the first filtrate. The concentration of lithium ion in the final filtrate thus obtained was measured at 16,253 ppm.

Thereafter, 14.40 kg of sodium carbonate (Na₂CO₃) was added to the first filtrate at a temperature of 65 °C to precipitate lithium carbonate. At this time, the amount of sodium carbonate added is an amount corresponding to a molar ratio (lithium ion: sodium ion) of lithium ions in the first filtrate to sodium ions of sodium carbonate to be added in a ratio of 1: 1. Thereafter, filter pressing was performed at 70 °C to separate the solid lithium carbonate and the second filtrate.

Thereafter, the separated lithium carbonate was washed with 31.68 liters of water and again subjected to filter pressing twice, and dried to obtain 8.52 kg of lithium carbonate as a product.

The amount of lithium in the product was 1.6 kg, which was very high, corresponding to an initial charge of 2.0 kg to 80% yield.

On the other hand, after collecting the second filtrate and the washing solution of lithium carbonate, 2.24 kg of sodium phosphate was added thereto to recover 0.28 kg of lithium phosphate, which was 2.5% of the initial amount of 11.12 kg.

As explained in the above, it will be understood by those skilled in the art that various changes and modifications may be made without departing from idea and scope of the claims described in the below. It is therefore to be understood that the above-described embodiments are illustrative in all aspects and not restrictive.

## Claims

1. A method for producing lithium chloride aqueous solution comprising:
introducing calcium chloride into a slurry containing a solvent and lithium phosphate; and
obtaining a precipitate of chloroapatite which is an poorly soluble phosphoric acid compound and a lithium chloride aqueous solution by reacting lithium phosphate and calcium chloride in the slurry containing the solvent and lithium phosphate.

2. The method of Claim 1,
wherein, the solvent of the slurry is water.

3. The method of Claim 1,
wherein, the solvent of the slurry is deionized water.

4. The method of Claim 1,
in the step of introducing calcium chloride into the slurry containing the solvent and lithium phosphate, wherein the lithium phosphate is derived from lithium in brine, lithium in the waste battery, lithium in the ore, or a combination thereof.

5. The method of Claim 1,
wherein, a step of obtaining a precipitate of chloroapatite which is an poorly soluble phosphoric acid compound and a lithium chloride aqueous solution by reacting lithium phosphate and calcium chloride in the slurry containing the solvent and lithium phosphate is:
obtaining a precipitate of chloroapatite which is an poorly soluble phosphoric acid compound, unreacted lithium phosphate particle, and a lithium chloride aqueous solution by reacting lithium phosphate and calcium chloride in the slurry containing the solvent and lithium phosphate.

6. The method of Claim 1,
wherein the method for producing the lithium chloride aqueous solution is **characterized in that** the reaction conditions are neutral or basic conditions throughout all the steps.

7. The method of Claim 1,
wherein the method for producing the lithium chloride aqueous solution is **characterized in that** the reaction conditions are at least pH 7 throughout all the steps.

8. The method of Claim 1,
Wherein, the lithium phosphate is not obtained by a process of leaching through strong acid treatment.

9. The method of Claim 1,
wherein, a concentration of lithium ions in the lithium chloride aqueous solution is 10,000 ppm or more.

10. The method of Claim 1,
in the step of obtaining a precipitate of chloroapatite which is an poorly soluble phosphoric acid compound and a lithium chloride aqueous solution by reacting lithium phosphate and calcium chloride in the slurry containing the solvent and lithium phosphate,
the reaction rate of the lithium phosphate in the reaction of the lithium phosphate with calcium chloride is 90% or more.

11. The method of Claim 1, further comprises:
injecting the washed filtrate into the slurry containing the solvent and lithium phosphate so as to recover residual lithium in the washed filtrate after washing the obtained chloroapatite precipitate with water,
after obtaining a precipitate of chloroapatite which is an poorly soluble phosphoric acid compound and a lithium chloride aqueous solution by reacting lithium phosphate and calcium chloride in the slurry containing the solvent and lithium phosphate.

12. The method of Claim 1, further comprises:
injecting the washed filtrate into the lithium chloride aqueous solution obtained by the step of obtaining a precipitate of chloroapatite which is an poorly soluble phosphoric acid compound and a lithium chloride aqueous solution by reacting lithium phosphate and calcium chloride in the slurry containing the solvent and lithium phosphate, so as to recover residual lithium in the washed filtrate after washing the obtained chloroapatite precipitate with water,
after obtaining a precipitate of chloroapatite which is an poorly soluble phosphoric acid compound and a lithium chloride aqueous solution by reacting lithium phosphate and calcium chloride in the slurry containing the solvent and lithium phosphate.

13. The method of Claim 1,
in the step of introducing calcium chloride into a slurry containing a solvent and lithium phosphate,
wherein an amount of the introduced calcium chloride is 1.500 times or more and 2.334 times or less as much as the lithium phosphate based on the molar amount.

14. The method of Claim 1,
in the step of obtaining a precipitate of chloroapatite which is an poorly soluble phosphoric acid compound and a lithium chloride aqueous solution by reacting lithium phosphate and calcium chloride in the slurry containing the solvent and lithium phosphate,
the reaction temperature is 20 °C or more, and 105 °C or less, and the reaction pressure is 0 bar or more and 1.01325 bar or less.

15. The method of Claim 1,
in the step of obtaining a precipitate of chloroapatite which is an poorly soluble phosphoric acid compound and a lithium chloride aqueous solution by reacting lithium phosphate and calcium chloride in the slurry containing the solvent and lithium phosphate,
the reaction temperature is 100 °C or more, and 250 °C or less, and the reaction pressure is 1.01325 bar or more and 40 bar or less.

16. A method for producing lithium carbonate comprising:
preparing a lithium chloride aqueous solution; and
obtaining lithium carbonate and a filtrate by adding sodium carbonate to the lithium chloride aqueous solution;
wherein, a concentration of lithium ions in the lithium chloride aqueous solution is 10,000 ppm or more.

17. The method of Claim 16,
in the step of preparing a lithium chloride aqueous solution,
wherein, the lithium in the lithium chloride is derived from lithium in brine, lithium in the waste battery, lithium in the ore, or a combination thereof.

18. The method of Claim 16, further comprises:
obtaining lithium phosphate by adding a phosphorus supplying material to the filtrate,
after the step of obtaining lithium carbonate and a filtrate by adding sodium carbonate to the lithium chloride aqueous solution.

19. The method of Claim 16, further comprises:
injecting the washed filtrate into the lithium chloride aqueous solution in the step of preparing a lithium chloride aqueous solution, so as to recover residual lithium in the washed filtrate after washing the obtained lithium carbonate with water,
after the step of obtaining lithium carbonate and a filtrate by adding sodium carbonate to the lithium chloride aqueous solution.

20. The method of Claim 16,
in the step of obtaining lithium carbonate and a filtrate by adding sodium carbonate to the lithium chloride aqueous solution,
the sodium carbonate is added in such an amount that the molar ratio (lithium ion: sodium ion) of the lithium ion in the lithium chloride aqueous solution to the sodium ion in the sodium carbonate is 1: 0.8 to 1: 1.2.

21. The method of Claim 16,
in the step of obtaining lithium carbonate and a filtrate by adding sodium carbonate to the lithium chloride aqueous solution,
a reaction temperature is 20 °C or more and 100 °C or less.

22. The method of Claim 16,
in the step of preparing a lithium chloride aqueous solution,
wherein the lithium chloride aqueous solution is produced from the method for producing lithium chloride aqueous solution according to any one of claims 1 to 13.
